# EUROPEAN PATENT SPECIFICATION

(11) **EP 3 316 691 B1**
(45) Date of publication and mention of the grant of the patent: **24.07.2019**
(21) Application number: 16732641.2
(22) Date of filing: 28.06.2016
(51) Int. Cl.: A01N 63/04, A01N 25/08, A01P 13/02

(54) **CONIOTHYRIUM MINITANS FOR USE AGAINST MOSS GROWTH**
CONIOTHYRIUM MINITANS ZUR VERWENDUNG GEGEN MOOSWACHSTUM
CONIOTHYRIUM MINITRANS CONTRE LA CROISSANCE DE MOUSSE

(30) Priority: 02.07.2015 EP 15174941
(43) Date of publication of application: 09.05.2018
(73) Proprietor: Bayer CropScience Aktiengesellschaft, 40789 Monheim am Rhein (DE)
(72) Inventor: NOGA, Sandra, 51381 Leverkusen (DE)
(74) Representative: BIP Patents
(86) International application number: PCT/EP2016/064968
(87) International publication number: WO 2017/001383

(56) References cited:
- WO-A1-02/13615
- WO-A1-96/21358
- WO-A1-2005/077172
- DE-A1- 4 139 074
- FR-A1- 2 975 568
- N. TOMPREFA ET AL: "Antimicrobial activity of Coniothyrium minitans and its macrolide antibiotic macrosphelide A", JOURNAL OF APPLIED MICROBIOLOGY, vol. 106, no. 6, 1 June 2009 (2009-06-01), pages 2048-2056, XP055183907, ISSN: 1364-5072, DOI: 10.1111/j.1365-2672.2009.04174.x

## Description

Moss growth is in a number of places considered to be a nuisance and in many places unwelcome, for example on turfed areas or on trees and on asphalted or cobbled ground or otherwise paved ground and on the roofs of houses.

Methods for controlling moss growth include physical removal and chemical treatment or a combination of these methods. Chemical methods, in particular, frequently have side effects such as, for example, damage to other plants, staining, corrosion or pollution of the air and/or water (Davison and Byther, 1999; Algae, Lichens and Mosses on Plants. Pacific Northwest Plant Disease Control Handbook. p. 39). Moreover, the efficacy of many herbicides against mosses has not been studied thoroughly. Finally, the safety regulations to be adhered to also make the handling, dosing and storing of chemical products more complex. Chemical methods for controlling moss growth are described in WO 2005/077172 A1 and DE 41 39 074 A1.

The fungus *Coniothyrium minitans* was identified firstly in 1947 and can be found in soils worldwide. It attacks sclerotia (overwintering structures or survival structures) of *Sclerotinia sclerotiorum* and *Sclerotinia minor,* other *Sclerotinia* species and *Sclerotium cepivorum* and destroys them. These plant pathogens have a range of host plants, especially including useful plants, where they cause considerable damage.

In view of the possibilities for controlling moss, which are not optimal, and the intended reduction of water and air pollution by herbicides, alternative and less harmful methods for controlling mosses should be found.

This technical problem is solved by the present invention as defined in the claims.

The present invention relates to the use of *Coniothyrium minitans* for controlling or preventing moss growth, for example in crops of useful plants or in places such as paved places where moss growth is undesired.

*Coniothyrium minitans* has as yet only been known as a biological fungicide which acts against Sclerotinia species. In the context of the present invention, however, it has been found that the fungus also inhibits moss growth and/or causes existing moss to die. It is to be noted that the effect can indeed be attributed to the fungus and not, for example, to the presence of formulation aids (see example).

In accordance with the invention, all strains belonging to the species *Coniothyrium minitans* can be used which have moss-growth-inhibiting or moss-controlling properties.

An especially preferred strain of *Coniothyrium minitans* is CON/M/91-08 (described in WO 96/21358), which has been deposited at the Deutsche Sammlung für Mikroorganismen und Zellkulturen in Braunschweig under the accession number DSM9660. The strain is used as biological plant protection agent against the fungi *Sclerotinia sclerotiorum* and *Sclerotinia minor,* which are causative organisms of white mould, and is commercially available under the trade name Contans®.

*Coniothyrium minitans* strain CON/M/91-08, like other *Coniothyrium minitans* strains, may be cultured as described for example in WO 96/21358. For example, *Coniothyrium minitans* can be cultured on suitable substrates such as, for example, seeds of cereals, bran, straw or other plant matter, or else with the aid of agar culture medium conventionally used in fungal culture, for example potato dextrose agar or malt peptone agar, or on suitable support materials to which a culture medium has been added; and also in liquid nutrient media without the use of agar.

Usually, the strain is formulated on a carrier, preferably a water-soluble sugar carrier. The water-soluble carrier is preferably glucose or dextrose.

Besides *Coniothyrium minitans* CON/M/91-08, mutants of this strain which have the same properties in respect of moss growth as CON/M/91-08 are also encompassed.

Mosses are green terrestrial plants which can be divided into hornworts, liverworts and Bryophyta. *Coniothyrium minitans* is active against mosses in general, but in particular against Bryophyta such as, for example, haircap mosses.

Mosses sometimes grow in places where useful plants or ornamentals are being grown. To be mentioned here in particular is turf as found in parks, golf courses, sports grounds or in gardens. Turf is also frequently sold as turf rolls or turf sods, likewise susceptible to moss growth.

Other places where moss growth is undesired are certain areas or places, including paved areas or places, such as, for example, tiled, cobbled or asphalted areas, where mosses colonize joints or undesired gaps.

In a preferred embodiment, spores of Coniothyrium minitans are used.

Spores formed by Coniothyrium minitans are conidia (asexually formed spores), which are formed in pycnidia and are also referred to as pycnidiospores or pycnospores.

In a further preferred embodiment, the use takes place on turf.

In a further preferred embodiment, the use according to the invention takes place in gardens, parks, sport grounds, terraces, pavements and otherwise plant-free places.

In yet another preferred embodiment, the use takes place in combination with at least one herbicide which is preferably active against mosses.

In a further preferred embodiment, the herbicide is selected from the group consisting of dodecyldimethylammonium chloride, ACN (2-amino-3-chloro-1,4-naphthoquinone), carfentrazone-ethyl, lauroyl methyl-[beta]-alanine-sodium, ferrous ammonium sulphate, copper hydroxide, mancozeb, propineb, oxadiazone, formaldehyde and chlorothalonil.

In a further especially preferred embodiment, the use according to the invention takes place with at least one herbicide, simultaneously or alternatingly.

In a preferred embodiment, the application rate is between 2 and 2000 kg/ha. Preferred ranges comprise an application rate of between approximately 10 and approximately 500 kg/ha, furthermore preferred between approximately 20 and 200 kg/ha, for example 30, 40, 50, 100 or 150 kg/ha.

In a further preferred embodiment, the spore concentration in the formulation applied is between 1x10⁸ and 1x10¹⁰ /g.

The spores may be present in a concentration of between about 1 x 10⁷ and about 1 x 10¹⁵ spores/g carrier, preferably between about 1 x 10⁸ and about 1 x 10¹³ spores/g carrier. The most preferred concentration is between about 1 x 10⁸ and about 1 x 10¹⁰ spores/g carrier, for example about 1 x 10⁹ spores/g carrier.

In another preferred embodiment, the use according to the invention is preventive.

In a further aspect, the invention relates to a method of controlling mosses, comprising applying Coniothyrium minitans to an area to be kept free from mosses, such as, for example, a crop of useful plants or places such as paved places.

To describe the preferred embodiments of this aspect of the invention, those of the first aspect of the invention may be used.

In a preferred embodiment, Coniothyrium minitans strain CON/M/91-08 is used.

In a preferred embodiment of the method according to the invention, spores of Coniothyrium minitans are used.

In a further preferred embodiment, the application takes place onto and/or into the soil or the area to be treated.

In a further preferred embodiment the application is effected on turf.

In a further preferred embodiment, the method according to the invention is applied in gardens, parks, sports grounds, terraces, pavements and otherwise plant-free places.

In a further preferred embodiment, the application of *Coniothyrium minitans* takes place in combination with at least one herbicide which is active against mosses.

In an especially preferred embodiment, the herbicide is selected from the group consisting of dodecyldimethylammonium chloride, ACN (2-amino-3-chloro-1,4-naphthoquinone), carfentrazone-ethyl, lauroyl methyl-[beta]-alanine-sodium, ferrous ammonium sulphate, copper hydroxide, mancozeb, propineb, oxadiazone, formaldehyde and chlorothalonil.

In a further especially preferred embodiment, the application of *Coniothyrium minitans* and at least one herbicide takes place simultaneously or alternatingly.

In a preferred embodiment of the method according to the invention, the application rate is between 2 and 2000 kg/ha.

In a further preferred embodiment, the spore concentration in the formulation applied is between 1x10⁷ and 1x10¹⁰ /g.

In another preferred embodiment, the method according to the invention is preventive.

The examples which follow describe the invention in non-limiting form.

### Example 1: Drench test

The test was carried out under greenhouse conditions.

120 ml of a mixture of steamed field soil and sand (1:1) was filled into transparent cylindrical vessels 5.5 cm in size.

The test formulation, the product Contans®, comprising 1x10⁹ spores of the strain Coniothyrium minitans CON/M/91-08, was dissolved in water and diluted with water to the desired concentrations. 20 ml of the made-up solutions were pipetted onto the soil in the vessels.

The vessels were covered with a transparent lid.

The vessels remained in the greenhouse for the next 19 weeks, at 15°C and at natural light conditions. The lids were opened slightly after approximately 2 weeks, and the soil was watered every 3 weeks and kept moist.

The evaluation was effected by estimating, per vessel, the soil surface area which had in the meantime been covered by growth, predominantly haircup moss growth. 0% means an efficacy which corresponds to that of the untreated control, while an efficacy of 100% means that no moss growth was discernible.

In this test, the following formulations display an efficacy of up to 100% at a dose of 200kg/ha (see table 1).

**Table 1**

| | Concentration | | Efficacy % |
|---|---|---|---|
| Control | | | 0* |
| Contans ** | 2kg/ha | = 0.024mg/ml | 50 |
| Contans** | 20kg/ha | = 0.24mg/ml | 38 |
| Contans** | 200kg/ha | = 2.4mg/ml | 100 |
| Glucose | 200kg/ha | = 2.4mg/ml | 13 |
| DDAC-C10*** | 6.25kg/ha | =20µl/ml | 100 |

The Coniothyrium minitans spores used are bound to glucose. To rule out a potential effect of glucose on the moss growth, an experiment with glucose was carried out, and this experiment shows that the effect cannot be attributed to the glucose.
*Moss growth: 80% of area
** Coniothyrium minitans CON/M/91-08; 5x10⁸ viable spores/g
***Didecyldimethylammonium chloride with alkyl chain length C10

## Claims

1. Use of Coniothyrium minitans for controlling or preventing moss growth.

2. Method of controlling moss growth, comprising applying Coniothyrium minitans to an area to be kept free from mosses.

3. Use according to Claim 1 or method according to claim 2, wherein the strain is CON/M/91-08.

4. Use or method according to any one of Claims 1 to 3, wherein spores of Coniothyrium minitans are used.

5. Use according to one of Claims 1, 3 and 4, which takes place on turf.

6. Use or method according to one of Claims 1 to 4, which takes place in gardens, parks, sports grounds, terraces, pavements and otherwise plant-free places.

7. Use or method according to one of Claims 1 to 6, wherein the use or applying takes place in combination with at least one herbicide which is preferably active against mosses.

8. Use or method according to Claim 7, wherein the herbicide is selected from the group consisting of dodecyldimethylammonium chloride, ACN (2-amino-3-chloro-1,4-naphthoquinone), carfentrazone-ethyl, lauroyl methyl-[beta]-alanine-sodium, ferrous ammonium sulphate, copper hydroxide, mancozeb, propineb, oxadiazone, formaldehyde and chlorothalonil.

9. Use or method according to Claim 7 or 8, wherein the use takes place with at least one herbicide, simultaneously or alternatingly.

10. Use or method according to one of Claims 1 to 9, wherein the application rate is between 2 and 2000 kg/ha.

11. Use or method according to Claim 10, wherein the spore concentration in the formulation applied is between 1x10⁷ and 1x10¹⁰ /g.

12. Use according to one of Claims 1 and 3 to 11, which is preventive.

13. Method according to Claim 2, wherein the application takes place onto and/or into the soil.

14. Method according to one of Claims 2, 4 and 13, wherein the application is effected on turf.

15. Method according to Claim 7 or 8, wherein the application of *Coniothyrium minitans* and at least one herbicide takes place simultaneously or alternatingly.

## Patentansprüche

1. Verwendung von Coniothyrium minitans zur Bekämpfung oder Verhinderung von Mooswachstum.

2. Verfahren zur Bekämpfung von Mooswachstum, umfassend Aufbringen von Coniothyrium minitans auf ein von Moosen frei zu haltendes Areal.

3. Verwendung nach Anspruch 1 oder Verfahren nach Anspruch 2, wobei der Stamm CON/M/91-08 ist.

4. Verwendung oder Verfahren nach einem der Ansprüche 1 bis 3, wobei Sporen von Coniothyrium minitans verwendet werden.

5. Verwendung nach einem der Ansprüche 1, 3 und 4, die auf Rasen erfolgt.

6. Verwendung oder Verfahren nach einem der Ansprüche 1 bis 4, die in Gärten, Parks, Sportanlagen, an Terrassen, Bürgersteigen und ansonsten pflanzenfreien Plätzen erfolgt.

7. Verwendung oder Verfahren nach einem der Ansprüche 1 bis 6, wobei die Verwendung oder das Auftragen in Kombination mit mindestens einem Herbizid erfolgt, das bevorzugt gegen Moose wirksam ist.

8. Verwendung oder Verfahren nach Anspruch 7, wobei das Herbizid ausgewählt ist aus der Gruppe bestehend aus Dodecyldimethylammoniumchlorid, ACN (2-Amino-3-chloro-1,4-naphthochinon), Carfentrazone-ethyl, Lauroylmethyl-[beta]-alaninnatrium, Eisenammoniumsulfat, Kupferhydroxid, Mancozeb, Propineb, Oxadiazon, Formaldehyd und Chlorothalonil.

9. Verwendung oder Verfahren nach Anspruch 7 oder 8, wobei die Verwendung mit mindestens einem Herbizid gleichzeitig oder alternierend erfolgt.

10. Verwendung oder Verfahren nach einem der Ansprüche 1 bis 9, wobei die Aufbringungsrate zwischen 2 und 2000 kg/ha beträgt.

11. Verwendung oder Verfahren nach Anspruch 10, wobei die Sporenkonzentration in der aufgebrachten Formulierung zwischen 1x10⁷ und 1x10¹⁰ /g liegt.

12. Verwendung nach einem der Ansprüche 1 und 3 bis 11, die präventiv ist.

13. Verfahren nach Anspruch 2, wobei das Aufbringen auf und/oder in den Boden erfolgt.

14. Verfahren nach einem der Ansprüche 2, 4 und 13, wobei das Aufbringen auf Rasen erfolgt.

15. Verfahren nach Anspruch 7 oder 8, wobei die Aufbringung von Coniothyrium minitans und mindestens einem Herbizid gleichzeitig oder alternierend erfolgt.

## Revendications

1. Utilisation de *Coniothyrium minitans* pour le contrôle de ou la prévention contre la croissance de mousse.

2. Procédé de contrôle de la croissance de mousse, comprenant l'application de *Coniothyrium minitans* à une aire devant rester exempte de mousses.

3. Utilisation selon la revendication 1 ou procédé selon la revendication 2, la souche étant CON/M/91-08.

4. Utilisation ou procédé selon l'une quelconque des revendications 1 à 3, des spores de *Coniothyrium minitans* étant utilisées.

5. Utilisation selon l'une des revendications 1, 3 et 4, qui se produit sur du gazon.

6. Utilisation ou procédé selon l'une des revendications 1 à 4, qui se produit dans des jardins, des parcs, des terrains de sport, des terrasses, des trottoirs et d'autres emplacements exempts de plantes.

7. Utilisation ou procédé selon l'une des revendications 1 à 6, l'utilisation ou l'application se produisant en combinaison avec au moins un herbicide qui est préférablement actif contre les mousses.

8. Utilisation ou procédé selon la revendication 7, l'herbicide étant choisi dans le groupe constitué par le chlorure de dodécyldiméthylammonium, l'ACN (2-amino-3-chloro-1,4-naphtoquinone), la carfentrazone-éthyle, le lauroyl méthyl-[bêta]-alaninate de sodium, le sulfate d'ammonium ferreux, l'hydroxyde de cuivre, le mancozeb, le propineb, l'oxadiazone, le formaldéhyde et le chlorothalonil.

9. Utilisation ou procédé selon la revendication 7 ou 8, l'utilisation se produisant avec au moins un herbicide, simultanément ou en alternance.

10. Utilisation ou procédé selon l'une des revendications 1 à 9, la dose d'application se situant entre 2 et 2000 kg/ha.

11. Utilisation ou procédé selon la revendication 10, la concentration en spores dans la formulation appliquée se situant entre 1x10⁷ et 1x10¹⁰/g.

12. Utilisation selon l'une des revendications 1 et 3 à 11, qui est préventive.

13. Procédé selon la revendication 2, l'application se produisant sur et/ou dans le sol.

14. Procédé selon l'une des revendications 2, 4 et 13, l'application étant effectuée sur du gazon.

15. Procédé selon la revendication 7 ou 8, l'application de *Coniothyrium minitans* et d'au moins un herbicide se produisant simultanément ou en alternance.
